# EUROPEAN PATENT SPECIFICATION

(11) **EP 2 574 509 B1**
(45) Date of publication and mention of the grant of the patent: **14.11.2018**
(21) Application number: 12006694.9
(22) Date of filing: 25.09.2012
(51) Int. Cl.: B60S 1/08, G06K 9/00, G01N 21/55

(54) **Raindrop detecting device**
Regentropfen-Erkennungsvorrichtung
Dispositif de détection de gouttes de pluie

(30) Priority: 27.09.2011 JP 2011210637
(43) Date of publication of application: 03.04.2013
(73) Proprietor: Valeo Japan Co., Ltd., Saitama 360-0193 (JP)
(72) Inventor: Kataoka, Hiromasa, Ota-ku Tokyo 143-8521 (JP)
(74) Representative: Oppermann, Frank

(56) References cited:
- EP-A1- 1 627 785
- DE-A1- 10 005 125
- US-A- 5 436 541

## Description

### CROSS-REFERENCE TO RELATED APPLICATION

This application claims priority under 35 USC 119 from Japanese Patent Application No.210637/2011 filed on September 27, 2011.

### BACKGROUND OF THE INVENTION

### Field of the Invention

The present invention relates to a raindrop detecting device which emits light from a light-emitting element to a windshield and receives reflected light thereof by a light-receiving element to detect a state of raindrops on the windshield.

### Description of the Related Art

There is conventionally provided a raindrop detecting device in which pulse light is emitted on a windshield from a light-emitting element and the reflected light is received by a light-receiving element, which is then subjected to a signal process to detect a state of presence/absence of raindrops on the windshield, supplying the raindrop information to a vehicular wiper device, a vehicular light device or the like for control. That is, since the reflected light intensity on the windshield changes depending on an attachment state of the raindrops onto the windshield, a level of an output signal of the light-receiving element also changes. Accordingly when the level of the output signal of the light-receiving element is compared with a predetermined threshold, the presence/absence state of the raindrop can be detected.

Incidentally the level of the output signal of the light-receiving element differs depending on manufacturing variations, a mounting state onto the windshield or the like of the light-emitting element and the light-receiving element respectively. Therefore appropriate raindrop information as designed can not be generated by simple comparison with the threshold alone. For overcoming this problem, for example, Japanese Patent Issue No. 3419452 or US-A-5436541 conventionally proposes a technique of calibration in which at a first operation start of the raindrop detecting device such as at shipment adjustment thereof in a factory, that is, in a state of no attachment state of the raindrop or no blot on the windshield, the level of the output signal is compared with a reference signal to automatically control the output signal to a predetermined stable level. Therefore variations and mounting errors of individual components can be extensively compensated at the time of installing the raindrop detecting device on a vehicle, and it can be expected to realize the appropriate raindrop detection which almost has no dependence on the manufacture or mounting state.

However, in the conventional raindrop detecting device, the calibration is executed at the time of the first operation start of the device to compensate for the manufacturing variations or mounting errors of the components in such a manner as to realize the detection function as designed, and in addition to that, also in a case where aging degradation of the components is generated due to a continued use of a vehicle, the calibration is executed based upon comparison between the output signal of the light-receiving element and the reference signal. Examples of the aging degradation mainly include optical degradation, such as functional degradation of each of the light-emitting element and the light-receiving element, a damage of a scratch or the like of the windshield, or a change in properties of the windshield, but may include various events having an influence on an output signal level of the light-receiving element, such as degradation of a processing circuit relating to the light-emitting element and the light-receiving element.

The calibration in regard to such aging degradation is preferable for maintaining the appropriate raindrop detecting function, but, since the calibration is simply executed based upon the comparison between the level of the output signal and the reference signal in the conventional device, the calibration may be possibly executed also in a case where the device is not actually degraded with time. For example, when the windshield mists over with mist particles or the like, even in a case where it causes no problem in a vehicle driving and a wiper is not operated, the output signal level of the light-receiving element is lowered. Therefore the calibration is automatically executed for increasing the output signal to a stable level. In this case, the output signal level is too high at a regular time when the misting-over on the windshield is cleared, and even if the output signal level is changed from this level to a relatively low level, it is difficult to determine that the raindrop is attached on the windshield. Therefore there may possibly occur the functional degradation that the appropriate raindrop detection can not be performed.

Further, when the calibration is executed for each time of a temporal change of the environment in this way, the storage number of times of the calibration result becomes enormously large, which also causes a problem of exceeding the storage number of times limit of the memory. However, in the above conventional device, the aging degradation can not be identified and as a result, it is not avoidable to execute the useless calibration.

### SUMMARY OF THE INVENTION

Accordingly, the present invention is made in view of the above-described problems, and an object of the present invention is to provide a raindrop detecting device provided with a light-emitting device and a light-receiving element, which appropriately identifies aging degradation thereof to execute calibration.

For this purpose, according to an aspect of the present invention, a raindrop detecting device in which light is emitted from a light-emitting element onto a windshield and reflected light of the light is received by a light-receiving element to detect a state of raindrops on the windshield based upon a light-receiving signal outputted from the light-receiving element, comprises:
a determining unit configured to determine, when the light-receiving signal continues to be within a predetermined degradation determination zone for a predetermined time, which is set below a reference signal, that aging degradation of the device occurs; and
a calibration unit configured to match the light-receiving signal to a level of the reference signal when it is determined that the aging degradation of the device occurs, wherein,
the degradation determination zone is set to be in accordance with a signal level range defined between a first signal level in which a driver has a feeling of strangeness due to the aging degradation below the first signal level and a second signal level which is lower than the first signal level and has no possibility of being generated in the aging degradation.

The above predetermined time may include a period of time from a point of ignition-ON of a vehicle to a point where the vehicle starts in a state where a wiper is not driven, or in a state where the wiper is driven, may preferably include a period of time from a point where the driving of the wiper is finished.

According to the aspect in the present invention, by eliminating the event not relating to the aging degradation of the device from the target of the calibration and certainly detecting the aging degradation thereof, the calibration is appropriately executed based on the aging degradation.

### BRIEF DESCRIPTION OF THE DRAWINGS

Other objects, features, and advantages of the present invention will become more apparent from the following detailed description made with reference to the accompanying drawings, in which like parts are designated by like reference numbers and in which:
Fig. 1 is a block diagram showing the structure according to an embodiment in the present invention;
Fig. 2 is a concept diagram showing the arrangement structure of a sensor component according to the embodiment;
Fig. 3 is a flow chart showing the details of a calibration control process according to the embodiment;
Fig. 4 is a diagram showing level sections of a light-receiving signal according to the embodiment;
Fig. 5 is a diagram showing a light-receiving signal at aging degradation and a calibration method according to the embodiment;
Fig. 6 is a diagram showing a light-receiving signal at the other aging degradation and a calibration method according to the embodiment;
Fig. 7 is a diagram showing a light-receiving signal at non-aging degradation according to the embodiment; and
Fig. 8 is a diagram showing a light-receiving signal at the furthermore different non-aging degradation according to the embodiment.

### DESCRIPTION OF THE PREFERRED EMBODIMENTS

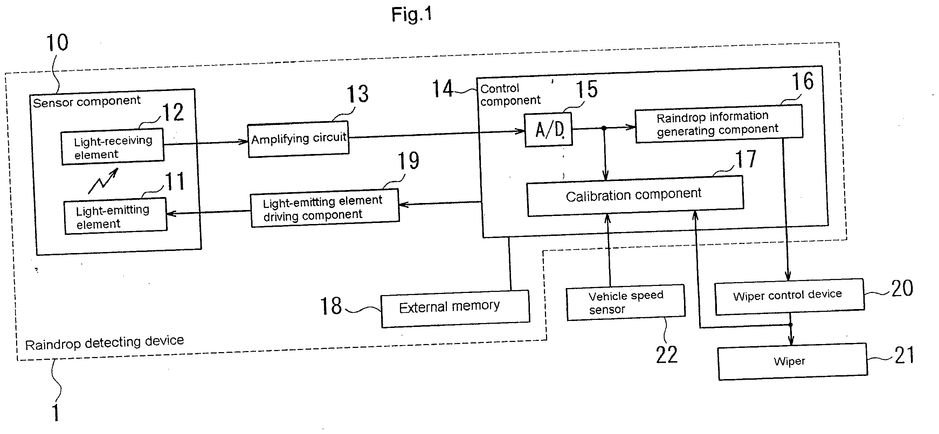

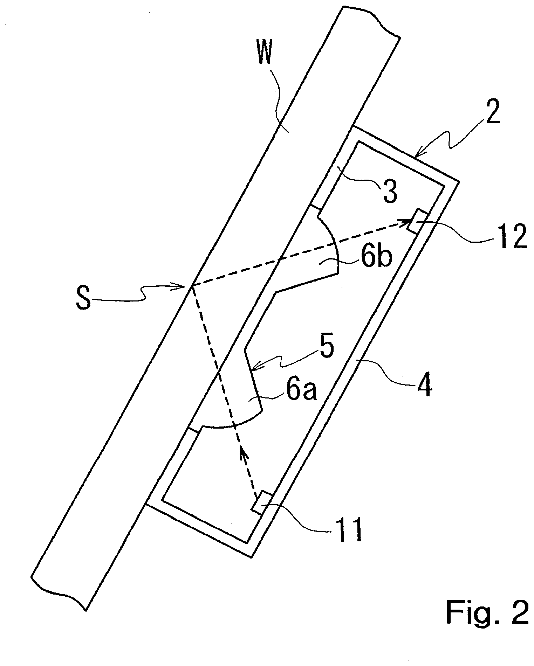

Next, a raindrop detecting device for controlling a vehicular wiper according to an embodiment in the present invention will be explained with the accompanying drawings. Fig. 1 is a block diagram showing the structure of an embodiment and Fig. 2 is a concept diagram showing the arrangement structure of a sensor component. First, the structure of a sensor component 10 in a raindrop detecting device 1 will be explained with reference to Fig. 2. The sensor component 10 is unitized as a casing 2 having a front wall 3 and a rear wall 4 opposing with each other and is mounted on an inner surface of a windshield W in a vehicle. That is, a prism 5 is provided in a window formed in the front wall 3, and a light-emitting element 11 and a light-receiving element 12 are installed on the rear wall 4.

The light-emitting element 11 and the light-receiving element 12 are arranged in such a manner as to direct the respective optical axes to a predetermined section (detection face) S in the windshield W, wherein light emitted from the light-emitting element 11 goes through the prism 5, is reflected on an outer boundary face in the predetermined section S in the windshield W, and is received by the light-receiving element 12. Further, the prism 5 is provided with lens portions 6a and 6b on an optical path from the light-emitting element 11 to the light-receiving element 12. The sensor component 10 is mounted on an inner surface of the windshield W such that the prism 5 makes close contact therewith by a transparent adhesive or the like, which is transparent in a light-emitting wavelength of the light-emitting element 11 and has a refraction index equivalent to that of the prism 5 or the windshield W.

Next, the entire structure of the raindrop detecting device 1 will be explained with reference to Fig. 1. The light-emitting element 11 is composed of, for example, a light-emitting diode (LED) and is connected to a light-emitting element driving component 19, and the light-emitting driving component 19 is connected to a control component 14 composed of a microcomputer. The light-emitting element driving component 19 receives a drive signal from the control component 14 to drive the light-emitting element 11, thus outputting pulse light from the light-emitting element 11. The light-receiving element 12 is composed of, for example, a photodiode (PD) and is connected via an amplifying circuit 13 to the control component 14. Light-receiving current outputted from the light-receiving element 12 is converted in voltage in the amplifying circuit 13 for amplification, which is inputted into the control component 14 at timing in response to the pulse emitting of the light-emitting element 11, as a light-receiving signal.

The control component 14 controls each component in the raindrop detecting device 1, and is also provided with an A/D converter (A/D) 15, a raindrop information generating component 16, and a calibration component 17. The A/D converter 15 converts an analogue light-receiving signal from the amplifying circuit 13 into a digital value (A/D value). The raindrop information generating component 16 makes determination on presence/absence or an attachment state of raindrops on the windshield W based upon comparison between the A/D value of the light-receiving signal and a predetermined threshold to generate the raindrop information, which is outputted to a wiper control device 20 for controlling a wiper 21.

The calibration component 17 compares the light-receiving signal with a target light-receiving level as a reference signal to increase a drive current value in a predetermined unit for driving the light-emitting element in a direction where the A/D value of the light-receiving signal is in agreement with the target light-receiving level, and sends a drive signal to the light-emitting element driving component 19. In addition, the calibration component 17 repeatedly compares a new light-receiving signal with the target light-receiving level to increase the drive current value, and stores the drive current value in an external memory 18 when the A/D value of the light-receiving signal is in agreement with the target light-receiving level.

The control component 14, when an unillustrated ignition switch (IGN) turns on, reads out the drive current value stored in the external memory 18 for each drive of a vehicle, and outputs the drive signal to the light-emitting element driving component 19 to drive the light-emitting element 11 by the drive current value. In addition, the raindrop information generating component 16 makes the determination on raindrops based upon output of the light-receiving element 12 to generate the raindrop information. A vehicle speed signal is inputted to the calibration component 17 from a vehicle speed sensor 22. Further, a wiper driving signal to be outputted to the wiper 21 is inputted from the wiper control device 20 thereto.

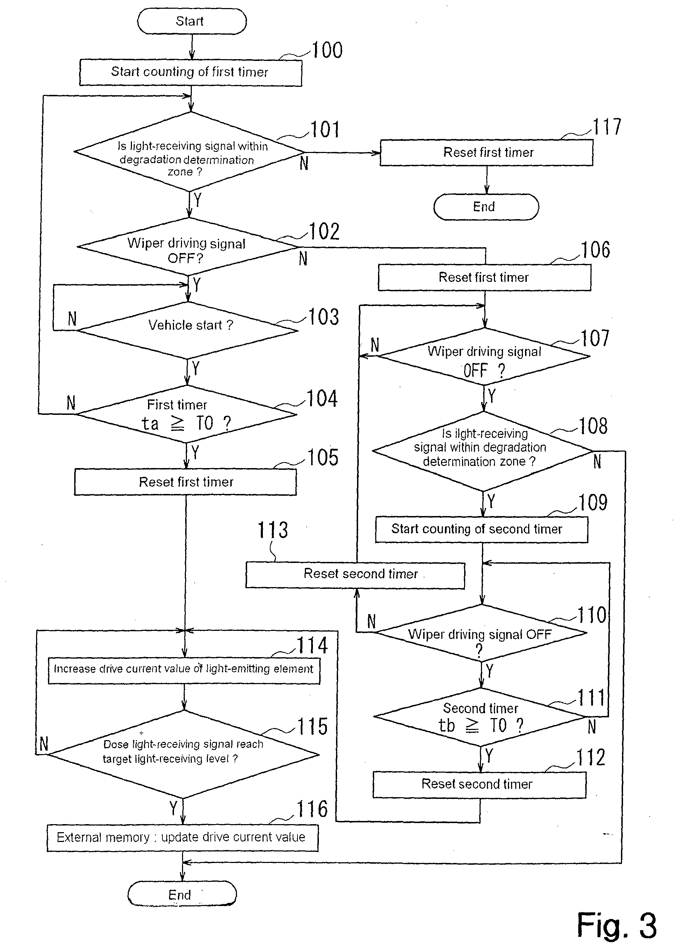

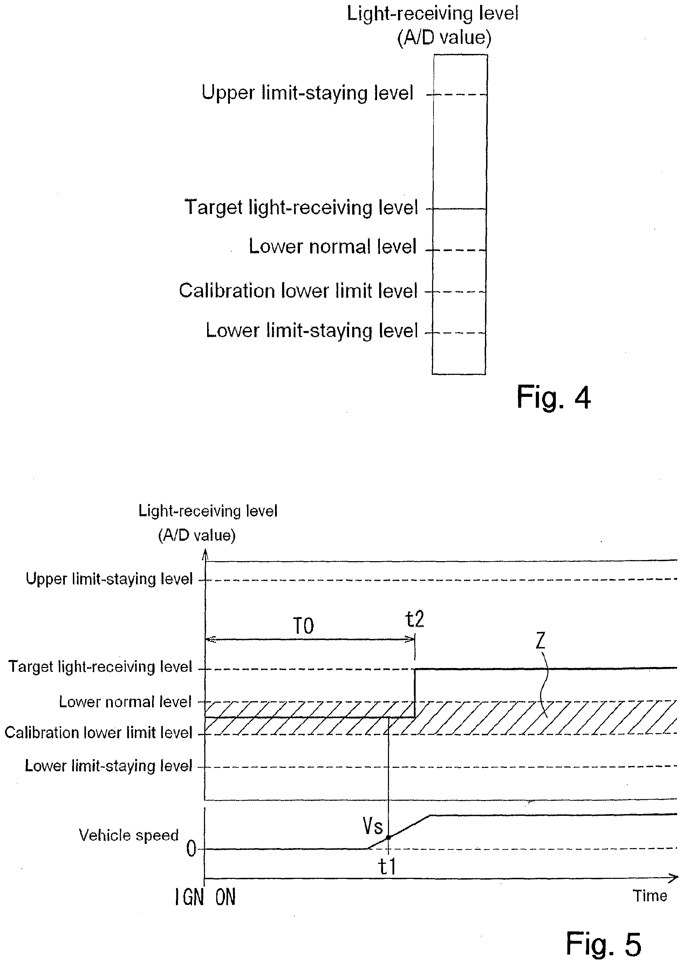

Fig. 3 is a flow chart showing the details of a control process relating to the calibration for the aging degradation in the raindrop detecting device 1. It should be noted that the light-receiving signal is, for making the determination on necessity of the calibration, sectioned into predetermined levels set as shown in Fig. 4. The present process starts at a first time of a vehicle drive when the ignition switch turns on, in parallel to generation of the raindrop information. First, at step 100 the calibration component 17 starts counting of a built-in first timer, and at step 101 it is checked whether or not a light-receiving signal (A/D value thereof) inputted from the light-receiving element 12 to the control component 14 is within a degradation determination zone Z in advance set. The degradation determination zone Z corresponds to a level range defined between a lower normal level and a calibration lower limit level as shown in Fig. 4.

Here, the target light-receiving level is a desired level of the light-receiving signal estimated in a state where the windshield is clean, and is set substantially in the intermediate section within a level changing range of the output in the light-receiving element. The lower normal level is lower than the target light-receiving level, and when the A/D value of the light-receiving signal is equal to or less than the lower normal level, a driver has a feeling of strangeness in an operation of the wiper, and therefore in such a level, there occurs a possibility of causing the driver to recognize the aging degradation. In addition, the calibration lower limit level is further lower than the lower normal level, and is a level having no possibility that the aging degradation occurs. The lower limit-staying level is a level where it is determined that a physical defect of the detecting device occurs in a case where a predetermined time elapses in a state where the light-receiving level is equal to or less than the lower limit-staying level. Therefore, for example, even if the light-receiving level is instantaneously equal to or less than the lower limit-staying level by a change of the light-receiving level due to the passing of a wiper blade at a wiper operation, the event is not determined as the physical defect of the detecting device. The upper limit-staying level is similarly a level where it is determined that the physical defect occurs in a case where a predetermined time elapses in a state where the light-receiving level is equal to or more than the upper limit-staying level.

When the light-receiving signal is within the degradation determination zone Z, the process goes to step 102. When the light-receiving signal is not within the degradation determination zone Z, after at step 117 the first timer is reset, the present process ends, the control component 14 uses a drive current value stored in the external memory 18 to drive the light-emitting element 11, and the raindrop information generating component 16 continues to make the determination on the raindrop.

At step 102 it is checked whether or not a wiper driving signal is OFF. When the wiper driving signal is OFF, the process goes to step 103, and when the wiper driving signal is ON, the process goes to step 106. At step 103 it is checked whether or not a vehicle has started, based upon a change of a vehicle speed. When the vehicle has started and is traveling, the process goes to step 104, and when the vehicle has not started yet, step 103 is repeatedly executed until the vehicle starts. At step 104 it is checked whether or not time ta, during which the light-receiving signal counted by the first timer continues to be within the degradation determination zone Z, is a predetermined time T0 or more. When the time ta for the light-receiving signal to be within the degradation determination zone Z is the predetermined time TO or more, at step 105 the first timer is reset, and then the process goes to step 114, and when the time ta has not reached the predetermined time T0, the process goes back to step 101.

In a case where at step 102 it is checked that the wiper driving signal is ON, at step 106 the first timer is reset. In addition, at step 107 the process waits until the wiper driving signal changes into OFF, and then goes to step 108. At step 108 it is checked whether or not the light-receiving signal is within the degradation determination zone Z. When the light-receiving signal is within the degradation determination zone Z, the process goes to step 109, and when the light-receiving signal is not within the degradation determination zone Z, the present process ends.

At step 109 the counting of a second timer starts, and at step 110 it is checked whether or not the wiper driving signal is OFF. When the wiper driving signal is OFF, the process goes to step 111, and when the wiper driving signal is ON, at step 113 the second timer is reset, and then the process goes back to step 107. At step 111 it is checked whether or not time tb counted by the second timer is equal to or more than a predetermined time T0. The time tb counted by the second timer is a period of time during which the light-receiving signal continues to be within the degradation determination zone Z after the wiper driving signal changes into OFF. When the time tb for the light-receiving signal to be within the degradation determination zone Z is equal to or more than the predetermined time T0, at step 112 the second timer is reset, and then the process goes to step 114, and when the time tb has not reached the predetermined time T0, the process goes back to step 110 from step 111.

At step 114 after step 105 or step 112, the calibration component 17 changes a drive current value of a drive signal transmitted to the light-receiving element driving component 19 in an increasing direction, for example, in a unit of 1mA. At step 115 the calibration component 17 compares a new light-receiving signal with the target light-receiving level to check whether or not a level of the light-receiving signal reaches the target light-receiving level. Step 114 and step 115 are repeated until the level of the light-receiving signal reaches the target light-receiving level. When the level of the light-receiving signal reaches the target light-receiving level, the process goes to step 116, wherein the drive current value in the external memory 18 is updated to complete the calibration. That is, the drive current value at the time the light-receiving signal is in agreement with the target light-receiving level is stored in the external memory 18. Afterwards the light-emitting element 11 is driven based upon the drive current value newly stored in the external memory 18, and generation of the raindrop information continues to be made based upon the output of the light-receiving element 12.

According to the above control process, particularly to the flow of step 100 to step 105, and step 114 to step 116, as shown in Fig. 5, in a state where a light-receiving signal shown in a solid line continues to be within the degradation determination zone Z from a point (IGN ON) where the ignition switch turns on, when a vehicle starts, that is, a vehicle speed exceeds a predetermined value vs (for example, 10Km/h), the calibration is executed at time t2 when a predetermined time T0 elapses from a point where the ignition switch turns on, and the light-receiving signal is increased to the target light-receiving level.

It is estimated that the vehicle starts to move because, even if the level of the light-receiving signal is low, the windshield W is clean and there occurs no problem with visibility in driving even if the wiper is not operated. Therefore it is determined that the low level of the light-receiving signal is generated due to the aging degradation, and the calibration is executed. It should be noted that a rise in the light-receiving signal from the level within the degradation determination zone Z to the target light-receiving level is made by repeating an increase in the drive current value in a predetermined unit, but because of a short processing-time interval, the light-receiving level is instantaneously moved to the target light-receiving level in the figure. In addition, in a case where the predetermined time TO has already elapsed when the vehicle speed exceeds the predetermined value vs, the calibration is executed at time t1 when the vehicle speed exceeds the predetermined value vs.

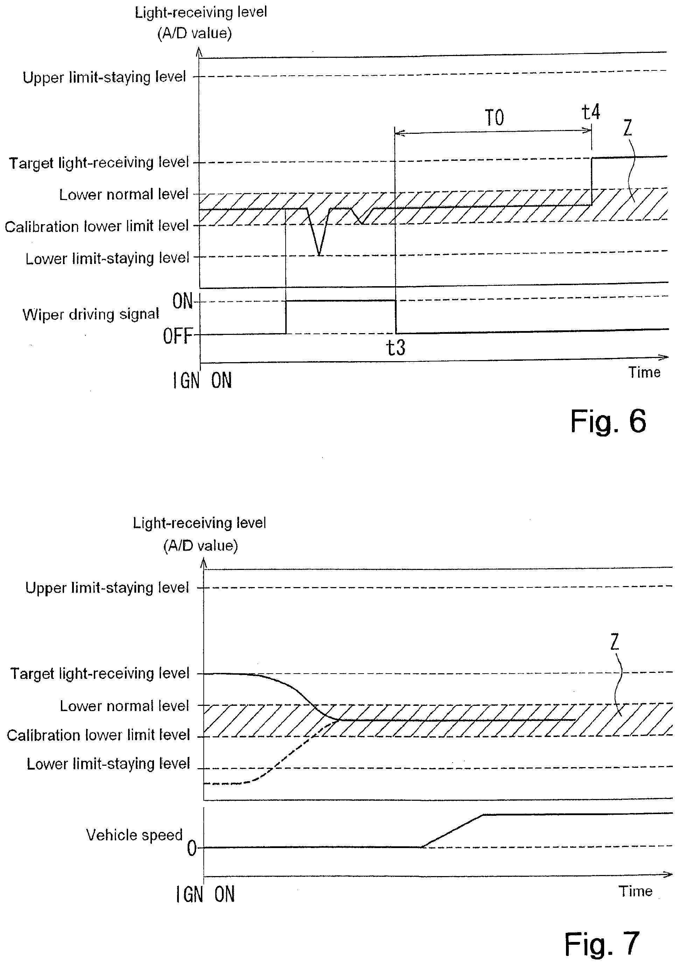

In addition, there are some cases where when the wiper 21 is driven, the level of the light-receiving signal is out of the degradation determination zone Z by a reciprocal movement of the wiper blade, but according to the flow of step 101, step 102, step 107 to step 112, and step 114 to step 116, as shown in Fig. 6, also in a state where the light-receiving signal continues to be within the degradation determination zone Z during a predetermined time TO from time t3 when the wiper driving signal becomes OFF, the calibration is executed at time t4 when the corresponding predetermined time TO elapses, and the light-receiving signal is increased to the target light-receiving level.

The reason for the above execution of the calibration is as follows. As similar to the vehicle start, regardless of the windshield W is supposed to be clean by the wiping operation of the wiper 21, the level of the light-receiving signal remains to be low. It is determined that the reason for it is that the aging degradation occurs, and the calibration is executed. It should be noted that in a case of Fig. 5 and Fig. 6, the reason for setting the predetermined time TO is that a state where an external disturbance does not occur on the surface of the windshield W by the wiping operation of the wiper or the like is confirmed to make sure of reliability of the determination. In addition, in Fig. 6, for simplification, the wiper driving signal is shown to correspond to one reciprocal movement of the wiper blade alone.

On the other hand, as shown in Fig. 7, when a first light-receiving signal when the ignition switch turns on is out of the degradation determination zone Z, the calibration is not executed according to the flow through step 101 and step 117 to the end step. That is, the light-receiving signal shown in a solid line in Fig. 7 corresponds to the target light-receiving level at first, and is lowered smoothly thereafter. Therefore this level lowering is estimated as a phenomenon generated due to the clouding-over of the windshield W by mists or the like, and is not determined to be generated due to the aging degradation. In addition, the light-receiving signal shown in a broken line rising from the vicinity of the lower limit-staying level into the degradation determination zone Z is , for example , generated in a case where frozen ices on the windshield W are gradually defrosted by a defroster and partial visibility is obtained to enable the vehicle-moving start. Therefore this phenomenon has no relation to the aging degradation.

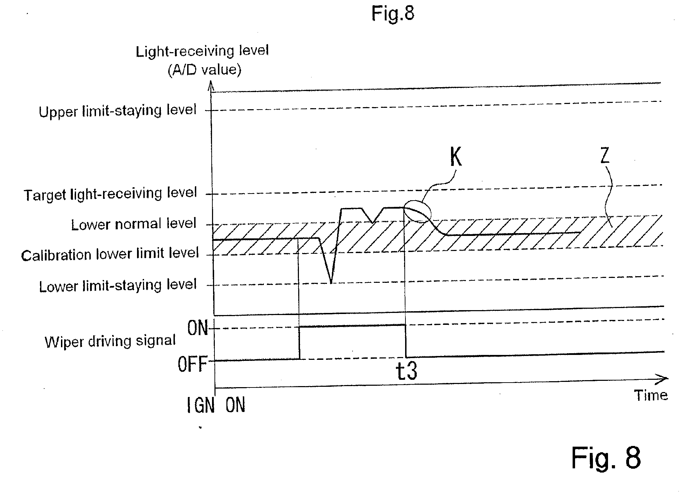

Furthermore, according to the flow through via step 101, step 102, and step 106 to step 108 to the end step, as shown in Fig. 8, in a case where even if the light-receiving signal is within the degradation determination zone Z before driving the wiper 21, the light-receiving signal becomes out of the degradation determination zone Z at a K section immediately after time t3 at the time the wiper driving signal becomes OFF after the wiper 21 is driven, the light-receiving signal within the degradation determination zone z is estimated as a phenomenon generated due to the clouding-over of the windshield W by mists or the like, and is not determined as a result of the aging degradation. Therefore the calibration is not executed.

In the present embodiment, the target light-receiving level corresponds to the reference signal in the present invention, the lower normal level corresponds to the first signal level in the present invention, and the calibration lower limit level corresponds to the second signal level in the present invention. In addition, the time T0 corresponds to the predetermined time. Further, in the flow chart of Fig. 3, the determining unit is configured of the processing function of step 100 to step 104 and the processing function of step 101, step 102, and step 107 to step 111, and the calibration unit is configured of step 114 to step 116.

The present embodiment is configured as described above. Below the target light-receiving level, the signal level range, which is defined by the lower normal level in which a driver has a feeling of strangeness due to the aging degradation in a range equal to or less than the lower normal level and the calibration lower limit level which is lower than the lower normal level and has no possibility that the aging degradation occurs, is set as the degradation determination zone Z. When the light-receiving signal continues to be within the degradation determination zone Z for the predetermined time T0, it is determined that the aging degradation occurs, so that the calibration component 17 matches the light-receiving signal up to the target light-receiving level. Therefore the calibration suitably in response to the aging degradation is executed.

Particularly the predetermined time T0 includes a period of time from a point of the ignition-on of a vehicle to a point of the vehicle start until a state where the wiper 21 is not driven. Therefore the aging degradation can be confirmed since the level of the light-receiving signal is low regardless of no problem with the driving eyesight even if the wiper 21 is not driven. Accordingly the light-receiving signal which temporarily enters into the degradation determination zone Z and has no relation to the aging degradation can be removed from the calibration. In addition, when the wiper 21 is driven, the predetermined time TO is set as a period of time after the driving of the wiper 21 is finished. Thereby even in a case where the level of the light-receiving signal becomes out of the degradation determination zone Z by the reciprocal movement of the wiper blade, the aging degradation can be certainly detected by confirming that the light-receiving signal continues to be within the degradation determination zone Z thereafter.

The calibration is executed such that the drive current value of the light-emitting element 11 is changed to match the output of the light-receiving element 12 up to the target light-receiving level. Therefore by comparing with the process of matching the reference level up to the actual light-receiving signal level, it is not required to make a complicated change in determination logic or the like in the raindrop information generating component 16, leading to a simple structure.

It should be noted that in the present embodiment, in a case of Fig. 8, when the light-receiving signal becomes out of the degradation determination zone Z in the K section immediately after the wiper driving signal turns off, the calibration is not executed by determining that no aging degradation occurs. However, the determination region is not limited to the K section, and when there occurs the event that the light-receiving signal becomes out of the degradation determination zone Z even during a period of time where the wiper driving signal is ON, it may be determined that no aging degradation occurs.

In the present embodiment, the calibration for matching the light-receiving signal (A/D value) up to the target light-receiving level is executed with the control of increasing the drive current value of the light-emitting element 11, but is not limited thereto, and the calibration may be executed by any method, such as control of increasing an amplifying rate of the amplifying circuit 13. In addition, the drive current value of the light-emitting element 11 is stored in the external memory 18, but may be stored in the built-in memory of the control component 14.

While only the selected embodiment has been chosen to illustrate the present invention, it will be apparent to those skilled in the art from this disclosure that various changes and modifications can be made therein without departing from the scope of the invention as defined in the appended claims. Furthermore, the foregoing description of the embodiment according to the present invention is provided for illustration only, and not for the purpose of limiting the invention as defined by the appended claims and their equivalents.

### Description of Reference Signs

1 Raindrop detecting device
2 Casing
3 Front wall
4 Rear wall
5 Prism
6a, 6b Lens portion
10 Sensor component
11 Light-emitting element
12 Light-receiving element
13 Amplifying circuit
14 Control component
15 A/D converter
16 Raindrop information generating component
17 Calibration component
18 External memory
19 Light-emitting element driving component
20 Wiper control device
21 Wiper
22 Vehicle speed sensor
W Windshield

## Claims

1. A raindrop detecting device in which light is emitted from a light-emitting element (11) onto a windshield (W) and reflected light of the light is received by a light-receiving element (12) to detect a state of raindrops on the windshield based upon a light-receiving signal outputted from the light-receiving element, **characterized in** comprising:
a determining unit (14)configured to determine, when the light-receiving signal continues to be within a predetermined degradation determination zone for a predetermined time, which is set below a reference signal, that aging degradation of the device occurs; and
a calibration unit (14) configured to match the light-receiving signal up to a level of the reference signal when it is determined that the aging degradation of the device occurs, wherein,
the degradation determination zone is set to be in accordance with a signal level range defined between a first signal level in which a driver has a feeling of strangeness due to the aging degradation below the first signal level and a second signal level which is lower than the first signal level and has no possibility of being generated in the aging degradation.

2. A raindrop detecting device according to claim 1, wherein
the predetermined time includes a period of time from a point of ignition-ON of a vehicle to a point where the vehicle starts in a state where a wiper (21) is not driven.

3. A raindrop detecting device according to claim 1, wherein
the predetermined time includes, when a wiper (21)is driven, a period of time from a point where the driving of the wiper is finished.

4. A raindrop detecting device according to any of claims 1 to 3, wherein
the calibration unit (14)is executed in such a manner as to changing a drive current value of the light-emitting element.

## Patentansprüche

1. Eine Regentropfen-Erkennungsvorrichtung, bei der Licht von einem Licht emittierenden Element (11) auf eine Windschutzscheibe (W) emittiert wird und reflektiertes Licht von dem Licht von einem Licht empfangenden Element (12) empfangen wird, um das Vorhandensein von Regentropfen auf der Windschutzscheibe auf der Grundlage eines von dem Licht empfangenden Element ausgegebenen Lichtempfangssignals zu erkennen, **dadurch gekennzeichnet, dass** diese aufweist:
eine Bestimmungseinheit (14), die derart ausgebildet ist, dass diese, wenn das Lichtempfangssignal sich noch eine vorbestimmte Zeitdauer innerhalb einer vorbestimmten Degradationsbestimmungszone befindet, welche unterhalb eines Referenzsignals festgelegt ist, dass eine Alterungsdegradation der Vorrichtung eintritt; und
eine Kalibrierungseinheit (14), die derart ausgebildet ist, dass diese das Lichtempfangssignal auf einen Pegel des Referenzsignals anpasst, wenn bestimmt wird, dass die Alterungsdegradation der Vorrichtung eintritt, wobei
die Degradationsbestimmungszone in Übereinstimmung mit einem Signalpegelbereich festgelegt wird, der zwischen einem ersten Signalpegel, in dem ein Fahrer ein befremdendes Gefühl infolge einer Alterungsdegradation unterhalb des ersten Signalpegels hat, und einem zweiten Signalpegel, der kleiner als der erste Signalpegel ist, und keine Möglichkeit hat, in der Alterungsdegradation generiert zu werden, definiert wird.

2. Eine Regentropfen-Erkennungsvorrichtung nach Anspruch 1, wobei die vorbestimmte Zeit eine Zeitperiode von einem Zeitpunkt des Einschaltens der Zündung des Fahrzeugs bis zu einem Zeitpunkt, zu dem das Fahrzeug in einem Zustand startet, in dem ein Scheibenwischer (21) nicht betrieben wird, ist.

3. Eine Regentropfen-Erkennungsvorrichtung nach Anspruch 1, wobei die vorbestimmte Zeit, wenn ein Scheibenwischer (21) betrieben wird, eine Zeitperiode von einem Zeitpunkt, zu dem der Betrieb des Scheibenwischers beendet wird, umfasst.

4. Eine Regentropfen-Erkennungsvorrichtung nach irgendeinem der Ansprüche 1 bis 3, wobei die Kalibrierungseinheit (14) derart betrieben wird, dass der Wert eines Betriebsstroms des Licht emittierenden Elements verändert wird.

## Revendications

1. Dispositif de détection de gouttes de pluie dans lequel de la lumière est émise par un élément émettant de la lumière (11) sur un pare-brise (W) et la lumière réfléchie de la lumière est reçue par un élément de réception de lumière (12) pour détecter un état des gouttes de pluie sur le pare-brise sur la base d'un signal de réception de lumière émis par l'élément de réception de lumière, **caractérisé en ce qu'**il comprend :
une unité de détermination (14) configurée pour déterminer, quand le signal de réception de lumière continue à se trouver dans une zone de détermination de dégradation prédéterminée pendant un temps prédéterminé, qui est établie en-deçà d'un signal de référence, qu'une dégradation de vieillissement du dispositif survient ; et
une unité d'étalonnage (14) configurée pour correspondre au signal de réception de lumière jusqu'à un niveau du signal de référence quand il est déterminé que la dégradation de vieillissement du dispositif survient, dans lequel
la zone de détermination de dégradation est établie pour être en accord avec une plage de niveau de signal entre un premier niveau de signal dans lequel un conducteur a une impression d'étrangeté due à la dégradation de vieillissement en-deçà du premier niveau de signal et un second niveau de signal qui est inférieur au premier niveau de signal et n'a aucune possibilité d'être généré dans la dégradation de vieillissement.

2. Dispositif de détection de gouttes de pluie selon la revendication 1, dans lequel le temps prédéterminé inclut une période de temps à partir d'un point d'allumage d'un véhicule jusqu'à un point où le véhicule démarre dans un état où un essuie-glace (21) n'est pas entraîné.

3. Dispositif de détection de gouttes de pluie selon la revendication 1, dans lequel le temps prédéterminé inclut, quand un essuie-glace (21) est entraîné, une période de temps à partir d'un point où l'entraînement de l'essuie-glace est terminé.

4. Dispositif de détection de gouttes de pluie selon l'une quelconque des revendications 1 à 3, dans lequel
l'unité d'étalonnage (14) est exécutée de façon à changer une valeur de courant d'entraînement de l'élément émettant de la lumière.
